# EUROPEAN PATENT APPLICATION

(11) **EP 3 355 145 A1**
(43) Date of publication of application: **01.08.2018**
(21) Application number: 18153289.6
(22) Date of filing: 24.01.2018
(51) Int. Cl.: G05B 23/02

(54) **SYSTEMS AND METHODS FOR RELIABILITY MONITORING**

(30) Priority: 30.01.2017 US 201715419770
(71) Applicant: General Electric Company, Schenectady, NY 12345 (US)
(72) Inventor: JIANG, Xiaomo, Atlanta, GA 30339 (US); KORSEDAL, John, Robert, Greenville, SC 29615-4614 (US)
(74) Representative: Fischer, Michael Maria

(57) **Abstract**

Systems (100) and methods for reliability monitoring are disclosed. According to one embodiment of the disclosure, a method (400) for reliability monitoring can include receiving (405) operational data (125) associated with a power plant (105) or a power plant component (110). The method (400) may further include receiving (410) training data (140) from one or more different power plants and receiving (415) geographical information system (GIS) data (130) associated with the power plant (105) or the power plant component (110). Based at least in part on the operational data (125), the training data (140), and the GIS data (130), the method (400) includes determining (420) a failure probability score and a remaining life (230) associated with operation of the power plant (105) or the power plant component (110). Also, based at least in part on the operational data (125), the training data (140), and the GIS data (130), the method (400) includes detecting (425) one or more anomalies (245) associated with operation of the power plant (105) or the power plant component (110). The method (400) further includes determining (430) a ranking of the one or more anomalies (245), generating (435) an alarm (250) indicative of the one or more anomalies (245) associated with the operation of the power plant (105) or the power plant component (110) and identifying (440) at least one root cause of the one or more anomalies (245) associated with the operation of the power plant (105) or the power plant component (110). The method (400) further includes identifying (445) a repair or replacement recommendation for the power plant (105) or the power plant component (110).

## Description

### TECHNICAL FIELD

Embodiments of this disclosure generally relate to power plants, and more specifically, to systems and methods for reliability monitoring.

### BACKGROUND

A power plant can include one or more power plant components, such as, for example, a turbine, a valve, a pump, and so on. Component failures in power plants may lead to costly repairs and potentially extensive loss of operational revenue. As an example, failure of a component can cause trips and failed starts and may lead to extended outages while the component is repaired or replaced.

### BRIEF DESCRIPTION OF THE DISCLOSURE

Certain embodiments may include systems and methods for reliability monitoring. According to one embodiment of the disclosure, a method can be provided. The method may include receiving operational data associated with a power plant or a power plant component. The method may further include receiving training data from one or more different power plants and receiving geographical information system (GIS) data associated with the power plant or the power plant component. Based at least in part on the operational data, the training data, and the GIS data, the method includes determining a failure probability score and a remaining life associated with operation of the power plant or the power plant component. Also, based at least in part on the operational data, the training data, and the GIS data, the method includes detecting one or more anomalies associated with operation of the power plant or the power plant component. The method further includes determining a ranking of the one or more anomalies, generating an alarm indicative of the one or more anomalies associated with the operation of the power plant or the power plant component and identifying at least one root cause of the one or more anomalies associated with the operation of the power plant or the power plant component. The method further includes identifying a repair or replacement recommendation for the power plant or the power plant component.

According to another embodiment of the disclosure, a system can be provided. The system may include a controller. The system can also include a memory with instructions executable by a computer for performing operations that can include: receiving operational data associated with a power plant or a power plant component, receiving training data from one or more different power plants and receiving geographical information system (GIS) data associated with the power plant or the power plant component, based at least in part on the operational data, the training data, and the GIS data, determining a failure probability score and a remaining life associated with operation of the power plant or the power plant component, based at least in part on the operational data, the training data, and the GIS data, detecting one or more anomalies associated with operation of the power plant or the power plant component, determining a ranking of the one or more anomalies, generating an alarm indicative of the one or more anomalies associated with the operation of the power plant or the power plant component, identifying at least one root cause of the one or more anomalies associated with the operation of the power plant or the power plant component, and identifying a repair or replacement recommendation for the power plant or the power plant component.

According to another embodiment of the disclosure, a system can be provided. The system may include a power plant and a power plant component. The system may further include a controller in communication with the power plant. The system can also include a memory with instructions executable by a computer for performing operations that can include: receiving operational data associated with a power plant or a power plant component, receiving training data from one or more different power plants and receiving geographical information system (GIS) data associated with the power plant or the power plant component, based at least in part on the operational data, the training data, and the GIS data, determining a failure probability score and a remaining life associated with operation of the power plant or the power plant component, based at least in part on the operational data, the training data, and the GIS data, detecting one or more anomalies associated with operation of the power plant or the power plant component, determining a ranking of the one or more anomalies, generating an alarm indicative of the one or more anomalies associated with the operation of the power plant or the power plant component, identifying at least one root cause of the one or more anomalies associated with the operation of the power plant or the power plant component, and identifying a repair or replacement recommendation for the power plant or the power plant component.

The disclosure is not limited to power plants or power plant components, but can be applied to a variety of assets, such as an airplane, liquidated natural gas (LNG) plants, chemical process plants, etc. Other embodiments, features, and aspects of the disclosure will become apparent from the following description taken in conjunction with the following drawings.

### BRIEF DESCRIPTION OF THE DRAWINGS

Having thus described the disclosure in general terms, reference will now be made to the accompanying drawings, which are not necessarily drawn to scale, and wherein:
FIG. 1 illustrates an example system environment for reliability monitoring in accordance with certain embodiments of the disclosure.
FIG. 2 illustrates another example system for reliability monitoring in accordance with certain embodiments of the disclosure.
FIG. 3 illustrates another example system for reliability monitoring in accordance with certain embodiments of the disclosure.
FIG. 4 illustrates an example flowchart of a method for reliability monitoring in accordance with certain embodiments of the disclosure.
FIG. 5 illustrates an example control system configured for providing systems and methods for reliability monitoring in accordance with certain embodiments of the disclosure.

The disclosure now will be described more fully hereinafter with reference to the accompanying drawings, in which example embodiments of the disclosure are shown.

### DETAILED DESCRIPTION

The following detailed description includes references to the accompanying drawings, which form part of the detailed description. The drawings depict illustrations, in accordance with example embodiments. This disclosure may, however, be embodied in many different forms and should not be construed as limited to the example embodiments set forth herein; rather, these example embodiments, which are also referred to herein as "examples," are described in enough detail to enable those skilled in the art to practice the present subject matter. The example embodiments may be combined, other embodiments may be utilized, or structural, logical, and electrical changes may be made, without departing from the scope of the claimed subject matter. The following detailed description is, therefore, not to be taken in a limiting sense, and the scope is defined by the appended claims and their equivalents. Like numbers refer to like elements throughout.

Certain embodiments described herein relate to systems and methods for reliability monitoring. In one embodiment, a method for reliability monitoring can be provided. The method can include receiving operational data associated with a power plant or a power plant component. The method can also include receiving training data from one or more different power plants. The method can also include receiving geographical information system (GIS) data associated with the power plant or the power plant component. The method can also include, based at least in part on the operational data, the training data, and the GIS data, determining a failure probability score and a remaining life associated with operation of the power plant or the power plant component. Further, the method can include based at least in part on the operational data, the training data, and the GIS data, detecting one or more anomalies associated with operation of the power plant or the power plant component. Moreover, the method can include determining a ranking of the one or more anomalies. The method can also include generating an alarm indicative of the one or more anomalies associated with the operation of the power plant or the power plant component. The method can also include identifying at least one root cause of the one or more anomalies associated with the operation of the power plant or the power plant component. The method can further include identifying a repair or replacement recommendation for the power plant or the power plant component.

One or more technical effects associated with certain embodiments herein may include, but are not limited to, monitoring reliability of an asset, such as power plants and respective power plant components. Predicting failures and misoperations for an asset, such as power plants and power plant components, can enable a customer to proactively plan outages to repair or replace components and avoid potentially lengthy unplanned outages. The following provides the detailed description of various example embodiments related to systems and methods for reliability monitoring.

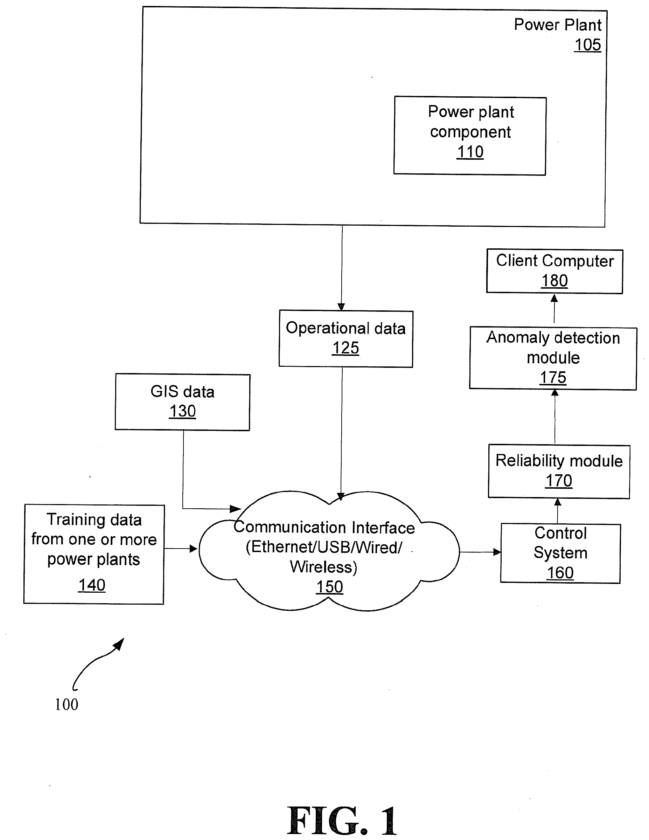

FIG. 1 depicts an example system 100 to implement certain methods and systems for reliability monitoring, such as in a power plant 105. According to an example embodiment of the disclosure, the power plant 105 may include one or more power plant components, such as 110 of FIG. 1, and one or more controllers, such as the control system 160, that can control the power plant 105 and/or the one or more power plant components 110. The terms "controller" and "control system" may be used interchangeably throughout the disclosure. The system environment 100, according to an embodiment of the disclosure, can further include operational data 125 that can receive data from sensors associated with the power plant 105 or the one or more power plant components 110, training data from one or more power plants 140, GIS (geographic information system) data 130, a communication interface 150, a control system 160, a reliability module 170, an anomaly detection module 175, and a client computer 180.

Referring again to FIG. 1, according to an example embodiment of the disclosure, the power plant 105 may be any type of plant that produces electrical power, such as, for example, a combined cycle plant, a cogeneration plant, a simple cycle plant, and so on.

Referring again to FIG. 1, according to an example embodiment of the disclosure, the one or more power plant components 110 associated with the power plant 105 may be a turbine that produces power, or may be a component of a turbine, such as, for example, a turbine blade or a combustion can. In other embodiments, the one or more power plant components 110 may be an auxiliary plant equipment, such as, for example, a control valve, a pump, a compressor, and so on.

The operational data 125, training data from one or more power plants 140, and GIS data 130 may include operational and monitoring (O & M) data, repair and inspection data, maintenance history data, failure mechanism data, aging parameter data, atmospheric data, water chemistry data, and so on.

The operational data 125 associated with the power plant 105 or the one or more power plant components 110 may include data gathered from the power plant 105 or the one or more power plant components 110 using an on-site monitor (OSM), which may sample data at rates of about 1 second, 5 seconds, 30 seconds, 1 minute, and so on. The operational data 125 may include performance parameters related to various components of the power plant 105, including, for example, flows, temperatures, pressures, relative humidity, vibrations, power produced, and so on.

According to an example embodiment of the disclosure, training data from one or more power plants 140 may include data from a fleet of power plants similar in configuration to the power plant 105. That is, each of the power plants 140 is a different power plant than power plant 105, but the configuration of each of the power plants 140 can be similar to that of power plant 105. Alternately, training data from one or more power plants 140 may include data associated with a prior operation of the power plant 105. The training data from one or more power plants 140 may also include a failure mode and effects analysis (FMEA) data from one or more power plants for components similar to one or more power plant components 110 or FMEA associated with a fleet of power plants similar to the power plant 105. The training data from one or more power plants 140 may also include data from an asset database. An asset may refer to a power plant, such as the power plant 105 or to a power plant component, such as the one or more power plant components 110. The training data from one or more power plants 140 may include data from an asset database, including, asset configuration, asset historical events and anomalies, asset inspection, replacement and maintenance history, and so on. The training data from one or more power plants 140 may also include failure physics associated with one or more power plants or power plant components, information regarding site configuration, information regarding customer configuration, and so on.

The operational data 125, training data from one or more power plants 140, and/or GIS data 130 may include discrete data and time series data. For example, operational data 125 may include time series data such as a power produced by the turbine, a combustion temperature associated with the turbine and so on. Operational data may also include aging parameter data, such as, for example, operational metrics of fired hours and fired starts, number of historical anomalies, and so on. In an example embodiment of the disclosure, the GIS data 130 may include time series data, such as water chemistry data over an example period of about 1 year, atmospheric data including particulate data over an example period of 6 months, and so on.

In another embodiment of the disclosure, discrete data associated with the training data from one or more power plants 140 may include a failure mode and effects analysis (FMEA) data from one or more power plants such as 105. Discrete data may also be available in the form of mean time between failures (MTBF) of one or more power plant components such as 110, forced outages of a power plant such as 105, replacement parts status for a power plant such as 105 and so on. Discrete data and time series data may include data regarding failure events and anomalous operational events associated with one or more power plant components such as 105. In an example embodiment of the disclosure, training data from one or more power plants 140 may include a set of data from power plants or one or more power plant components that have similar configurations to, respectively, the power plant 105 or the one or more power plant components 110. The operational data 125 may include data representing operation of the power plant 105 or the one or more power plant components 110 at a current time or from a prior operating time, such as, for example, operation from about 1 day prior to current time, operation from about 1 week prior to current time, operation from about 4 weeks prior to current time, and so on.

The control system 160 can be communicatively coupled to receive operational data 125, training data from one or more power plants 140, and GIS data 130 via a communication interface 150, which can be any of one or more communication networks such as, for example, an Ethernet interface, a Universal Serial Bus (USB) interface, or a wireless interface. In certain embodiments, the control system 160 can be coupled to the operational data 125, GIS data 130 and training data from one or more power plants 140 by way of a hard wire or cable, such as, for example, an interface cable.

The control system 160 can include a computer system having one or more processors that can execute computer-executable instructions to receive and analyze data from various data sources, such as the operational data 125, GIS data 130, and training data from one or more power plants 140, and can include a reliability module 170 and an anomaly detection module 175. The control system 160 can further provide inputs, gather transfer function outputs, and transmit instructions from any number of operators and/or personnel. The control system 160 can perform control actions as well as provide inputs to the reliability module 170 and the anomaly detection module 175. In some embodiments, the control system 160 may determine control actions to be performed based on data received from one or more data sources, for example, from the operational data 125, the GIS data or training data from one or more power plants 140. In some embodiments, the control system 160 may include the reliability module 170 and/or the anomaly detection module 175. In other instances, the control system 160 can be an independent entity communicatively coupled to the reliability module 170 and/or the anomaly detection module 175.

In accordance with an embodiment of the disclosure, a system for reliability monitoring may be provided. The system 100 may include a power plant 105, one or more power plant components 110 associated with the power plant 105, and a controller 160. The controller 160 can include a memory that can contain computer-executable instructions capable of receiving operational data 125 associated with the power plant 105 or the power plant component 110. The computer-executable instructions may be capable of receiving training data, such as training data from one or more power plants 140 and receiving GIS data 140 associated with the power plant 105 or the power plant component 110. Based at least in part on the operational data 125, the training data 140, and the GIS data 130, a failure probability score and a remaining life associated with operation of the power plant 105 or the one or more power plant components 110 may be determined. Furthermore, one or more anomalies associated with the power plant 105 or the one or more power plant components 110 may be detected. The computer-executable instructions may further determine a ranking of the one or more anomalies.

An alarm indicative of the one or more anomalies associated with operation of the power plant 105 or the one or more power plant components 110 may be generated. Furthermore, at least one root cause of the one or more anomalies associated with the operation of the power plant or the one or more power plant components may be identified. Furthermore, the memory associated with the controller 160 can further contain computer-executable instructions capable of identifying a repair or replacement recommendation for the power plant 105 or the one or more power plant components 110.

The failure probability and the remaining life associated with the operation of the power plant 105 or the one or more power plant components 110 may be determined by the reliability module 170, or by the control system 160. Similarly, the one or more anomalies associated with the power plant 105 or the one or more power plant components 110 may be detected by the anomaly detection module 175, by the control system 160, and/or by the reliability module 170.

The one or more anomalies associated with the power plant 105 or the one or more power plant components 110 may be detected on a real-time continuous basis. For example, the one or more anomalies may be detected continuously during operation of the power plant 105 or the one or more power plant components 110, such as, for example, during startup of the power plant 105, steady state operation of the power plant 105, and so on. In another example embodiment of the disclosure, the one or more anomalies may be detected on a discrete time interval basis. For example, the one or more anomalies may be detected about every 1 hour, every 2 hours, every 3 hours, and so on, irrespective of the operational status of the power plant 105 or the one or more power plant components 110. In an example embodiment of the disclosure, the one or more anomalies may also be determined when the power plant 105 is shut down, so that the one or more power plant components 110 may be non-operational.

Referring again to FIG. 1, the alarm indicative of the one or more anomalies may be outputted via a client device, for example, the client computer 180. Furthermore, the identified repair or replacement recommendation for the power plant 105 or the one or more power plant components 110 can be performed by or otherwise implemented by the control system 160.

Referring again to FIG. 1, the control system 160, the reliability module 170, and/ or the anomaly detection module 175 can include software and/or hardware to determine the failure probability score, the remaining life, and to detect one or more anomalies associated with the operation of the power plant 105 or the one or more power plant components 110. This may include, using a reliability model to analyze the operational data 125, the training data 140, and the GIS data 130. In an example embodiment of the disclosure, the reliability model may include implementing a data-driven reliability method. In other example embodiments, the reliability model may include implementing a physics-based method or implementing a hybrid modeling method. In an example embodiment of the disclosure, detecting the one or more anomalies associated with the power plant 105 or the one or more power plant components 110 may further include using a statistical predicting model for continuous condition monitoring of the power plant 105 or the one or more power plant components 110. In another example embodiment, detecting the one or more anomalies associated with the power plant 105 or the one or more power plant components 110 may include using a machine learning model for continuous condition monitoring of the power plant 105 or the one or more power plant components 110.

Referring again to FIG. 1, the control system 160, the reliability module 170, and/or the anomaly detection module 175 can include software and/or hardware to generate a set of characteristics of the alarm indicative of the one or more anomalies associated with operation of the power plant 105 or the one or more power plant components 110. This may include comparing the determined failure probability score to a threshold failure probability score. Based at least in part on the comparison, a weighing factor for the alarm may be determined, and based at least in part on the weighing factor, a duration and intensity of the alarm may be determined.

As mentioned above, the disclosure is not limited to power plants or power plant components, but can be applied to a variety of assets, such as an airplane, liquidated natural gas (LNG) plants, chemical process plants, etc.

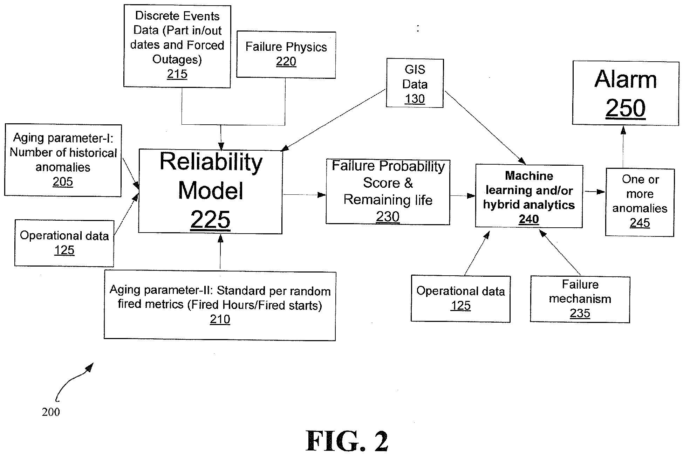

FIG. 2 depicts an example system 200 for implementing certain methods and systems for reliability monitoring. The reliability model 225 may be part of the control system 160. In other embodiments, the reliability model 225 may be independent of the control system 160, and may be part of the reliability module 170. In an example embodiment, the reliability model 225 may be part of the anomaly detection module 175.

Referring again to FIG. 2, various inputs from the operational data 125, the training data 140, and the GIS data 130 can be fed to the reliability model 225, such as, for example, aging parameter-I 205, that can include number of historical anomalies that have occurred at the power plant 105 or the one or more power plant components 110 or at a power plant such as 105, discrete events data 215 that can include number of forced outages, parts in/out status information, and so on. Additional data, such as, aging parameter-II 210, failure physics 220, and so on may also be provided to the reliability model 170. Based at least in part on the operational data 125, training data 140, and the GIS data 130, the computer instructions may determine a failure probably score and a remaining life 230 of the power plant 105 or the one or more power plant components 110. This may further be analyzed using machine learning and/or hybrid analytics 240 in the anomaly detection module 175. In an example embodiment, this may also be analyzed in the reliability module 170 and/or the control system 160. The operational data 125 and failure mechanism data 235 may be fed as inputs. Based at least in part on the analysis, one or more anomalies 245 may be detected, and an alarm 250 may be displayed via the client computer 180.

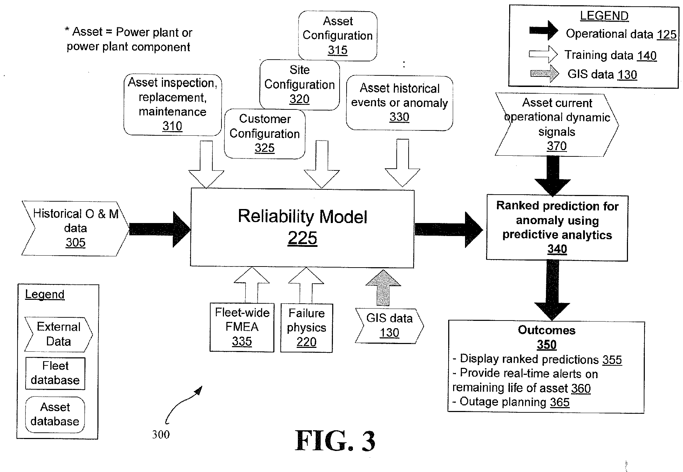

Referring now to FIG. 3, another example system 300 depicts an example system for reliability monitoring. Similar to the description for FIG. 2, the reliability model 225 can receive historical O & M data 305, information about the asset, where an asset refers to the power plant 105 or to the one or more power plant components 110. Asset information, such as asset configuration 315, can be fed to the reliability model 225. Asset configuration 315 may include type of power plant, type of turbine used, type of valve used, and so on. Other asset information, such as, for example, asset inspection, replacement and maintenance data 310 may also be fed to the reliability model. Asset inspection, replacement and maintenance data 310 may include information about latest inspection performed at the power plant 105. In another example embodiment, asset inspection, replacement and maintenance data 310 may include mean time between failures (MTBF) of the one or more power plant components 110, such as, for example, a fuel nozzle or a turbine blade. Additionally, data about the site configuration 320 and customer configuration 325 may also be fed to the reliability model.

The reliability module 170 and the anomaly detection module 175 may then determine one or more anomalies 245 associated with the operation of the power plant 105 or the one or more power plant components 110. A ranked prediction 340 of the one or more anomalies 245 can then be determined by a combination of the reliability model 225 with a current operational dynamics signals of the asset 370, such as an operating trend of a power plant during startup or shutdown. The reliability module 170, the control system 160, and the anomaly detection module 175 may provide outcomes 350 by way of display on a client computer, such as the client computer 180 of FIG. 1. The outcomes may include ranked list of the one or more anomalies 355, real-time alerts on remaining life of asset 360, outage planning information 365, and so on.

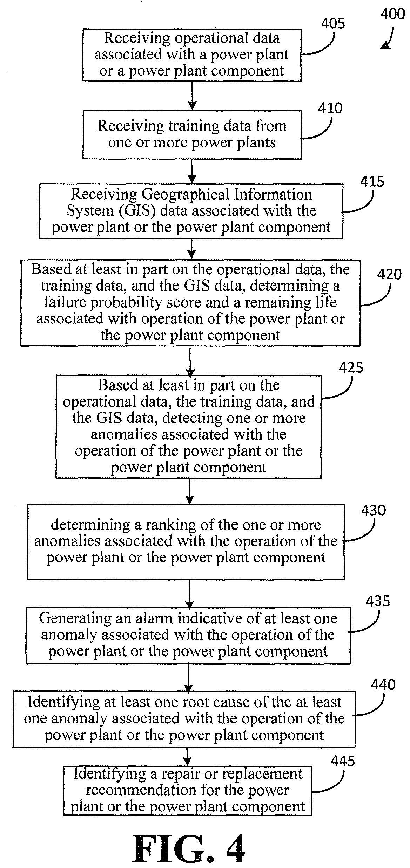

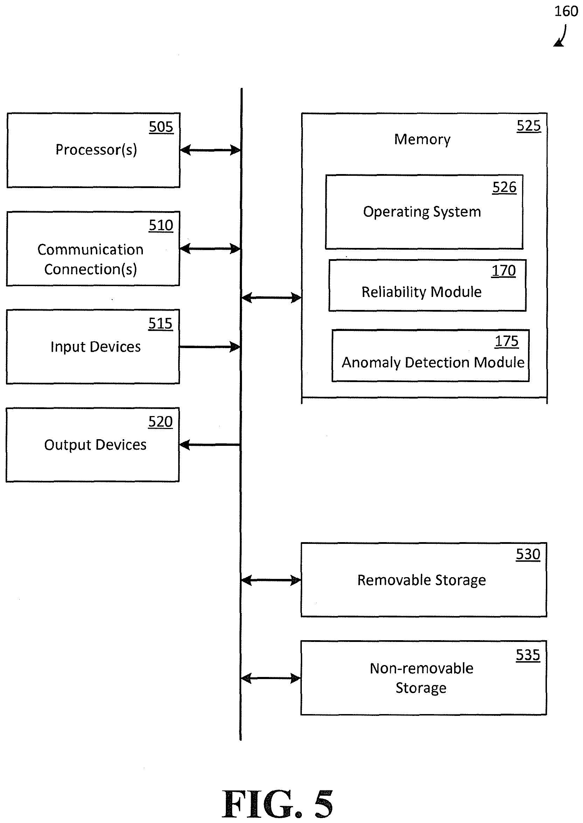

Referring now to FIG. 4, a flow diagram of an example method 400 for reliability monitoring is shown, according to an example embodiment of the disclosure. The method 400 may be utilized in association with various systems, such as the system 100 illustrated in FIG. 1, the respective systems 200 and 300 illustrated in FIG. 2 and FIG. 3, and/or the control system 160 illustrated in FIG. 5.

The method 400 may begin at block 405. At block 305, operational data associated with a power plant 105 or a power plant component 110 may be received. At block 410, training data 140 from one or more different power plants may be received. Next, at block 415, geographical information system (GIS) data associated with the power plant or the power plant component may be received. At block 420, the method 400 may further include determining a failure probability score and a remaining life 230 associated with operation of the power plant 105 or a power plant component 110, based at least in part on the operational data 125, the training data 140, and the GIS data 130. Next at block 425, the method 400 may further include detecting one or more anomalies 245 associated with operation of the power plant 105 or a power plant component 110, based at least in part on the operational data 125, the training data 140, and the GIS data 130. At block 430, the method 400 can include determining a ranking 355 of the one or more anomalies 245. Further at block 435, the method 400 can generating an alarm 250 indicative of the one or more anomalies 245 associated with the operation of the power plant 105 or the power plant component 110. Next, at block 440, the method 400 can include identifying at least one root cause of the one or more anomalies associated with the operation of the power plant or the power plant component. Further, at block 445, the method 400 may further include identifying a repair or replacement recommendation for the power plant 105 or a power plant component 110.

Attention is now drawn to FIG. 5, which illustrates an example controller 160 configured for implementing certain systems and methods for reliability monitoring in accordance with certain embodiments of the disclosure. The controller can include a processor 505 for executing certain operational aspects associated with implementing certain systems and methods for reliability monitoring in power plants in accordance with certain embodiments of the disclosure. The processor 505 can be capable of communicating with a memory 525. The processor 505 can be implemented and operated using appropriate hardware, software, firmware, or combinations thereof. Software or firmware implementations can include computer-executable or machine-executable instructions written in any suitable programming language to perform the various functions described. In one embodiment, instructions associated with a function block language can be stored in the memory 525 and executed by the processor 505.

The memory 525 can be a non-transitory memory used to store program instructions that are loadable and executable by the processor 505 as well as to store data generated during the execution of these programs. Depending on the configuration and type of the controller 160, the memory 525 can be volatile (such as random access memory (RAM)) and/or non-volatile (such as read-only memory (ROM), flash memory, etc.). In some embodiments, the memory devices can also include additional removable storage 530 and/or non-removable storage 535 including, but not limited to, magnetic storage, optical disks, and/or tape storage. The disk drives and their associated computer-readable media can provide non-volatile storage of computer-readable instructions, data structures, program modules, and other data for the devices. In some implementations, the memory 525 can include multiple different types of memory, such as static random access memory (SRAM), dynamic random access memory (DRAM), or ROM.

The memory 525, the removable storage 530, and the non-removable storage 535 are all examples of non-transitory, computer-readable storage media. For example, computer-readable storage media can include volatile and non-volatile, removable and non-removable media implemented in any method or technology for storage of information such as computer-readable instructions, data structures, program modules or other data. Additional types of computer storage media that can be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tapes, magnetic disk storage or other magnetic storage devices, or any other medium which can be used to store the desired information and which can be accessed by the devices. Combinations of any of the above should also be included within the scope of computer-readable media.

Controller 160 can also include one or more communication connections 510 that can allow a control device (not shown) to communicate with devices or equipment capable of communicating with the controller 160. The controller can also include a computer system (not shown). Connections can also be established via various data communication channels or ports, such as USB or COM ports to receive cables connecting the controller 160 to various other devices on a network. In one embodiment, the controller 160 can include Ethernet drivers that enable the controller 160 to communicate with other devices on the network. According to various embodiments, communication connections 510 can be established via a wired and/or wireless connection on the network.

The controller 160 can also include one or more input devices 515, such as a keyboard, mouse, pen, voice input device, gesture input device, and/or touch input device. It can further include one or more output devices 520, such as a display, printer, and/or speakers.

In other embodiments, however, computer-readable communication media can include computer-readable instructions, program modules, or other data transmitted within a data signal, such as a carrier wave, or other transmission. As used herein, however, computer-readable storage media do not include computer-readable communication media.

Turning to the contents of the memory 525, the memory 525 can include, but is not limited to, an operating system (OS) 526 and one or more application programs or services for implementing the features and aspects disclosed herein. Such applications or services can include a reliability module 170 and an anomaly detection module 175 for executing certain systems and methods for reliability monitoring in power plants. The reliability module 170 and the anomaly detection module 175 can reside in the memory 525 or can be independent of the controller 160, as represented in FIG. 1. In one embodiment, the reliability module 170 and the anomaly detection module 175 can be implemented by software that can be provided in configurable control block language and can be stored in non-volatile memory. When executed by the processor 505, the reliability module 170 and the anomaly detection module 175 can implement the various functionalities and features associated with the controller 160 described in this disclosure.

As desired, embodiments of the disclosure may include a controller 160 with more or fewer components than are illustrated in FIG. 5. Additionally, certain components of the controller 160 of FIG. 5 may be combined in various embodiments of the disclosure. The controller 160 of FIG. 5 is provided by way of example only.

References are made to block diagrams of systems, methods, apparatuses, and computer program products according to example embodiments. It will be understood that at least some of the blocks of the block diagrams, and combinations of blocks in the block diagrams, may be implemented at least partially by computer program instructions. These computer program instructions may be loaded onto a general purpose computer, special purpose computer, special purpose hardware-based computer, or other programmable data processing apparatus to produce a machine, such that the instructions which execute on the computer or other programmable data processing apparatus create means for implementing the functionality of at least some of the blocks of the block diagrams, or combinations of blocks in the block diagrams discussed.

These computer program instructions may also be stored in a non-transitory computer-readable memory that can direct a computer or other programmable data processing apparatus to function in a particular manner, such that the instructions stored in the computer-readable memory produce an article of manufacture including instruction means that implement the function specified in the block or blocks. The computer program instructions may also be loaded onto a computer or other programmable data processing apparatus to cause a series of operations to be performed on the computer or other programmable apparatus to produce a computer implemented process such that the instructions that execute on the computer or other programmable apparatus provide task, acts, actions, or operations for implementing the functions specified in the block or blocks.

One or more components of the systems and one or more elements of the methods described herein may be implemented through an application program running on an operating system of a computer. They also may be practiced with other computer system configurations, including hand-held devices, multiprocessor systems, microprocessor based or programmable consumer electronics, mini-computers, mainframe computers, and the like.

Application programs that are components of the systems and methods described herein may include routines, programs, components, data structures, and so forth that implement certain abstract data types and perform certain tasks or actions. In a distributed computing environment, the application program (in whole or in part) may be located in local memory or in other storage. In addition, or alternatively, the application program (in whole or in part) may be located in remote memory or in storage to allow for circumstances where tasks may be performed by remote processing devices linked through a communications network.

Many modifications and other embodiments of the example descriptions set forth herein to which these descriptions pertain will come to mind having the benefit of the teachings presented in the foregoing descriptions and the associated drawings. Thus, it will be appreciated that the disclosure may be embodied in many forms and should not be limited to the example embodiments described above.

Therefore, it is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Various aspects and embodiments of the present invention are defined by the following clauses:
1. A method comprising:
   receiving operational data associated with a power plant or a power plant component;
   receiving training data from one or more different power plants;
   receiving geographical information system (GIS) data associated with the power plant or the power plant component;
   based at least in part on the operational data, the training data, and the GIS data, determining a failure probability score and a remaining life associated with operation of the power plant or the power plant component;
   based at least in part on the operational data, the training data, and the GIS data, detecting one or more anomalies associated with operation of the power plant or the power plant component;
   determining a ranking of the one or more anomalies;
   generating an alarm indicative of the one or more anomalies associated with the operation of the power plant or the power plant component;
   identifying at least one root cause of the one or more anomalies associated with the operation of the power plant or the power plant component; and
   identifying a repair or replacement recommendation for the power plant or the power plant component.
2. The method of claim 1, wherein the operational data or the training data comprise:
   operational and monitoring (O & M) data, repair and inspection data, maintenance history data, failure mechanism data, aging parameter data, atmospheric data or water chemistry data.
3. The method of clause 1, wherein determining a failure probability score and a remaining life associated with operation of the power plant or the power plant component comprises:
   using a reliability model to analyze the operational data, the training data, and the GIS data, wherein the reliability model comprises: implementing a data-driven reliability method, implementing a physics-based method or implementing a hybrid modeling method.
4. The method of clause 1, wherein the operational data, the training data, and the GIS data comprise discrete data and time series data.
5. The method of clause 1, wherein detecting one or more anomalies associated with the power plant or the power plant component comprises: using a statistical predicting model for continuous condition monitoring or using a machine learning model for continuous condition monitoring.
6. The method of clause 1, wherein detecting one or more anomalies associated with the power plant or the power plant component comprises: detecting one or more anomalies on a real-time continuous basis and/or detecting one or more anomalies on a discrete time interval basis.
7. The method of clause 1, wherein generating an alarm indicative of the one or more anomalies associated with operation of the power plant or the power plant component further comprises:
   comparing the determined failure probability score to a threshold failure probability score and comparing the determined remaining life to a threshold remaining life;
   based at least in part on the comparison, determining a weighting factor; and
   based at least in part on the weighting factor, determining a duration and an intensity of the alarm.
8. A system comprising:
   a controller; and
   a memory comprising computer-executable instructions operable to:
      receive operational data associated with a power plant or a power plant component;
      receive training data from one or more different power plants;
      receive geographical information system (GIS) data associated with the power plant or the power plant component;
      based at least in part on the operational data, the training data, and the GIS data, determine a failure probability score and a remaining life associated with operation of the power plant or the power plant component;
      based at least in part on the operational data, the training data, and the GIS data, detect one or more anomalies associated with the power plant or the power plant component;
      determine a ranking of the one or more anomalies;
      generate an alarm indicative of the one or more anomalies associated with operation of the power plant or the power plant component;
      identify at least one root cause of the one or more anomalies associated with operation of the power plant or the power plant component; and
      identify a repair or replacement recommendation for the power plant or the power plant component.
9. The system of clause 8, wherein the operational data or the training data comprise:
   operational and monitoring (O & M) data, repair and inspection data, maintenance history data, failure mechanism data, aging parameter data, atmospheric data or water chemistry data.
10. The system of clause 8, wherein the memory comprising computer-executable instructions operable to determine a failure probability score and a remaining life associated with operation of the power plant or the power plant component is further operable to:
   use a reliability model to analyze the operational data, the training data, and the GIS data, wherein the reliability model comprises: implementing a data-driven reliability method, implementing a physics-based method or implementing a hybrid modeling method.
11. The system of clause 8, wherein the operational data, the training data and the GIS data comprise discrete data and time series data.
12. The system of clause 8, wherein the memory comprising computer-executable instructions operable to detect one or more anomalies associated with the power plant or the power plant component is further operable to: use a statistical predicting model for continuous condition monitoring or use a machine learning model for continuous condition monitoring.
13. The system of clause 8, wherein the memory comprising computer-executable instructions operable to detect one or more anomalies associated with the power plant or the power plant component is further operable to: detect the one or more anomalies on a real-time continuous basis and/or detect the one or more anomalies on a discrete time interval basis.
14. The system of clause 8, wherein the memory comprising computer-executable instructions operable to generate an alarm indicative of the one or more anomalies associated with operation of the power plant or the power plant component is further operable to:
   compare the determined failure probability score to a threshold failure probability score and comparing the determined remaining useful life to a threshold remaining life;
   based at least in part on the comparison, determine a weighting factor; and
   based at least in part on the weighting factor, determine a duration and an intensity of the alarm.
15. A system comprising:
   a power plant;
   a power plant component;
   a controller; and
   a memory comprising computer-executable instructions operable to:
      receive operational data associated with the power plant or the power plant component;
      receive training data from one or more different power plants;
      receive geographical information system (GIS) data associated with the power plant or the power plant component;
      based at least in part on the operational data, the training data, and the GIS data, determine a failure probability score and a remaining life associated with operation of the power plant or the power plant component;
      based at least in part on the operational data, the training data, and the GIS data, detect one or more anomalies associated with the power plant or the power plant component;
      determine a ranking of the one or more anomalies;
      generate an alarm indicative of the one or more anomalies associated with operation of the power plant or the power plant component; and
      identify a repair or replacement recommendation for the power plant or the power plant component.
16. The system of clause 15, wherein the operational data or the training data comprise:
   operational and monitoring (O & M) data, repair and inspection data, maintenance history data, failure mechanism data, aging parameter data, atmospheric data or water chemistry data.
17. The system of clause 15, wherein the memory comprising computer-executable instructions operable to determine a failure probability score and a remaining life associated with operation of the power plant or the power plant component is further operable to:
   use a reliability model to analyze the operational data, the training data, and the GIS data, wherein the reliability model comprises: implementing a data-driven reliability method, implementing a physics-based method or implementing a hybrid modeling method.
18. The system of clause 15, wherein the operational, the training data, and the GIS data comprise discrete data and time series data.
19. The system of clause 15, wherein the memory comprising computer-executable instructions operable to detect one or more anomalies associated with the power plant or the power plant component is further operable to: use a statistical predicting model for continuous condition monitoring or use a machine learning model for continuous condition monitoring.
20. The system of clause 15, wherein the memory comprising computer-executable instructions operable to generate an alarm indicative of the one or more anomalies associated with operation of the power plant or the power plant component is further operable to:
   compare the determined failure probability score to a threshold failure probability score and comparing the determined remaining useful life to a threshold remaining life;
   based at least in part on the comparison, determine a weighting factor; and
   based at least in part on the weighting factor, determine a duration and an intensity of the alarm.

## Claims

1. A system (100) comprising:
a power plant (105);
a power plant component (110);
a controller (160); and
a memory (525) comprising computer-executable instructions operable to:
receive operational data (125) associated with the power plant (105) or the power plant component (110);
receive training data from one or more different power plants (140);
receive geographical information system (GIS) data (130) associated with the power plant (105) or the power plant component (110);
based at least in part on the operational data (125), the training data (140), and the GIS data (130), determine a failure probability score and a remaining life (230) associated with operation of the power plant (105) or the power plant component (110);
based at least in part on the operational data (125), the training data (140), and the GIS data (130), detect one or more anomalies (245) associated with the power plant (105) or the power plant component (110);
determine a ranking of the one or more anomalies (245);
generate an alarm (250) indicative of the one or more anomalies (245) associated with operation of the power plant (105) or the power plant component (110); and
identify a repair or replacement recommendation for the power plant (105) or the power plant component (110).

2. The system (100) of claim 1, wherein the operational data (125) or the training data (140) (140) comprise: operational and monitoring (O & M) data, repair and inspection data, maintenance history data, failure mechanism data, aging parameter data, atmospheric data or water chemistry data.

3. The system (100) of claim 1, wherein the memory (525) comprising computer-executable instructions operable to determine a failure probability score and a remaining life (230) associated with operation of the power plant (105) or the power plant component (110) is further operable to:
use a reliability model (225) to analyze the operational data (125), the training data (140) (140), and the GIS data (130), wherein the reliability model (225) comprises: implementing a data-driven reliability method, implementing a physics-based method or implementing a hybrid modeling method.

4. The system (100) of claim 1, wherein the memory (525) comprising computer-executable instructions operable to detect one or more anomalies (245) associated with the power plant (105) or the power plant component (110) is further operable to: detect the one or more anomalies (245) on a real-time continuous basis and/or detect the one or more anomalies (245) on a discrete time interval basis.

5. The system (100) of claim 1, wherein the memory (525) comprising computer-executable instructions operable to generate an alarm (250) indicative of the one or more anomalies (245) associated with operation of the power plant (105) or the power plant component (110) is further operable to:
compare the determined failure probability score to a threshold failure probability score and comparing the determined remaining useful life to a threshold remaining life;
based at least in part on the comparison, determine a weighting factor; and
based at least in part on the weighting factor, determine a duration and an intensity of the alarm (250).

6. A method (400) comprising:
receiving (405) operational data (125) associated with a power plant (105) or a power plant component (110);
receiving (410) training data (140) from one or more different power plants;
receiving (415) geographical information system (GIS) data (130) associated with the power plant (105) or the power plant component (110);
based at least in part on the operational data (125), the training data (140), and the GIS data (130), determining (420) a failure probability score and a remaining life (230) associated with operation of the power plant (105) or the power plant component (110);
based at least in part on the operational data (125), the training data (140), and the GIS data (130), detecting (425) one or more anomalies (245) associated with operation of the power plant (105) or the power plant component (110);
determining (430) a ranking of the one or more anomalies (245);
generating (435) an alarm (250) indicative of the one or more anomalies (245) associated with the operation of the power plant (105) or the power plant component (110);
identifying (440) at least one root cause of the one or more anomalies (245) associated with the operation of the power plant (105) or the power plant component (110); and
identifying (445) a repair or replacement recommendation for the power plant (105) or the power plant component (110).

7. The method (400) of claim 6, wherein the operational data (125) or the training data (140) comprise: operational and monitoring (O & M) data, repair and inspection data, maintenance history data, failure mechanism data, aging parameter data, atmospheric data or water chemistry data.

8. The method (400) of claim 6, wherein determining (420) a failure probability score and a remaining life (230) associated with operation of the power plant (105) or the power plant component (110) comprises:
using a reliability model (225) to analyze the operational data (125), the training data (140), and the GIS data (130), wherein the reliability model (225) comprises: implementing a data-driven reliability method, implementing a physics-based method or implementing a hybrid modeling method.

9. The method (400) of claim 6, wherein detecting (425) one or more anomalies (245) associated with the power plant (105) or the power plant component (110) comprises: detecting (425) one or more anomalies (245) on a real-time continuous basis and/or detecting (425) one or more anomalies (245) on a discrete time interval basis.

10. The method (400) of claim 6, wherein generating (425) an alarm (250) indicative of the one or more anomalies (245) associated with operation of the power plant (105) or the power plant component (110) further comprises:
comparing the determined failure probability score to a threshold failure probability score (230) and comparing the determined remaining life to a threshold remaining life;
based at least in part on the comparison, determining a weighting factor; and
based at least in part on the weighting factor, determining a duration and an intensity of the alarm (250).

11. The method of claim 6, wherein the operational data (125), the training data (140), and the GIS data (130) comprise discrete data and time series data.

12. The method of claim 6, wherein detecting one or more anomalies (245) associated with the power plant (105) or the power plant component (110) comprises: using a statistical predicting model for continuous condition monitoring or using a machine learning model for continuous condition monitoring.

13. A system (100) comprising:
a controller (160); and
a memory (525) comprising computer-executable instructions operable to:
receive operational data (125) associated with a power plant (105) or a power plant component (110);
receive training data (140) from one or more different power plants (140);
receive geographical information system (GIS) data (130) associated with the power plant (105) or the power plant component (110);
based at least in part on the operational data (125), the training data (140), and the GIS data (130), determine a failure probability score and a remaining life (230) associated with operation of the power plant (105) or the power plant component (110);
based at least in part on the operational data (125), the training data (140), and the GIS data (130), detect one or more anomalies (245) associated with the power plant (105) or the power plant component (110);
determine a ranking of the one or more anomalies (245);
generate an alarm (250) indicative of the one or more anomalies (245) associated with operation of the power plant (105) or the power plant component (110);
identify at least one root cause of the one or more anomalies (245) associated with operation of the power plant (105) or the power plant component (110); and
identify a repair or replacement recommendation for the power plant (105) or the power plant component (110).

14. The system (100) of claim 13, wherein the operational data (125) or the training data (140) comprise: operational and monitoring (O & M) data, repair and inspection data, maintenance history data, failure mechanism data, aging parameter data, atmospheric data or water chemistry data.

15. The system (100) of claim 13, wherein the memory (525) comprising computer-executable instructions operable to determine a failure probability score and a remaining life (230) associated with operation of the power plant (105) or the power plant component (110) is further operable to:
use a reliability model (225) to analyze the operational data (125), the training data (140), and the GIS data (130), wherein the reliability model (225) comprises: implementing a data-driven reliability method, implementing a physics-based method or implementing a hybrid modeling method.
